# EUROPEAN PATENT APPLICATION

(11) **EP 4 456 579 A1**
(43) Date of publication of application: **30.10.2024**
(21) Application number: 22919078.0
(22) Date of filing: 23.12.2022
(51) Int. Cl.: H04W 8/24, H04W 72/23

(54) **METHOD AND APPARATUS FOR PROVIDING INFORMATION REGARDING USER EQUIPMENT IN WIRELESS COMMUNICATION SYSTEM**

(30) Priority: 06.01.2022 KR 20220002214
(71) Applicant: Samsung Electronics Co., Ltd, Suwon-si, Gyeonggi-do 16677 (KR)
(72) Inventor: LEE, Taeseop, Suwon-si Gyeonggi-do 16677 (KR); AGIWAL, Anil, Suwon-si Gyeonggi-do 16677 (KR); JUNG, Sangyeob, Suwon-si Gyeonggi-do 16677 (KR)
(74) Representative: Gulde & Partner
(86) International application number: PCT/KR2022/021183
(87) International publication number: WO 2023/132541

(57) **Abstract**

The present disclosure relates to a 5th generation (5G) or pre-5G communication system for supporting a higher data transmission rate than a 4th generation (4G) communication system such as long term evolution (LTE). According to various embodiments of the present disclosure, provided is a method for operation of user equipment in a wireless communication, the method comprising the steps of: receiving UECapabilityEnquiry from a base station; transmitting UECapabilityInformation to the base station; receiving RRCReconfiguration from the base station; transmitting RRCReconfigurationComplete to the base station; transmitting UEAssistanceInformation to the base station; receiving RRCReconfiguration from the base station; and transmitting RRCReconfigurationComplete to the base station.

## Description

### [Technical Field]

The disclosure relates to a method and a device for providing information on a terminal in a wireless communication system.

### [Background Art]

To meet the demand for wireless data traffic having increased since deployment of 4^{th} generation (4G) communication systems, efforts have been made to develop an improved 5th generation (5G) or pre-5G communication system. Therefore, the 5G communication system is also called a "beyond 4G network" communication system or a "post long term evolution (post LTE)" system.

The 5G communication system is considered to be implemented in ultrahigh frequency (mmWave) bands, (e.g., 60GHz bands) so as to accomplish higher data rates. To decrease the propagation loss of the radio waves and increase the transmission distance of radio waves in the ultrahigh frequency (mmWave) bands, beamforming, massive multiple-input multiple-output (massive MIMO), full dimensional MIMO (FD-MIMO), array antenna, an analog beam forming, and large scale antenna techniques have been discussed in the 5G communication system.

In addition, in the 5G communication system, technical development for system network improvement is under way based on evolved small cells, advanced small cells, cloud radio access networks (cloud RANs), ultra-dense networks, device-to-device (D2D) communication, wireless backhaul, moving network, cooperative communication, coordinated multi-points (CoMPs), reception-end interference cancellation, and the like.

In the 5G system, hybrid FSK and QAM modulation (FQAM) and sliding window superposition coding (SWSC) as an advanced coding modulation (ACM) scheme, and filter bank multi carrier (FBMC), non-orthogonal multiple access (NOMA), and sparse code multiple access (SCMA) as an advanced access technology have also been developed.

With recent developments in communication systems, there is an increasing demand to improve a procedure for providing and reporting information (e.g., auxiliary information) on a terminal.

### [Disclosure of Invention]

### [Technical Problem]

Based on the discussion described above, the disclosure provides a method and a device for providing information on a terminal in a wireless communication system.

### [Solution to Problem]

A method performed by a terminal according to an embodiment of the disclosure may include: receiving, from a base station, a first message including first information for configuration of reporting a minimum scheduling offset preferred by the terminal with respect to a subcarrier spacing for frequency range (FR) 2-2; and transmitting, to the base station, a second message including second information that is assistance information indicating the minimum scheduling offset preferred by the terminal with respect to the subcarrier spacing, wherein the subcarrier spacing includes at least one of 480 kHz or 960 kHz, the first message further includes third information for configuration of reporting a minimum scheduling offset preferred by the terminal with respect to a subcarrier spacing different from the subcarrier spacing for FR 2-2, and the first information and the third information are different.

A method performed by a base station according to another embodiment of the disclosure may include: transmitting, to a terminal, a first message including first information for configuration of reporting a minimum scheduling offset preferred by the terminal with respect to a subcarrier spacing for frequency range (FR) 2-2; and receiving, from the terminal, a second message including second information that is assistance information indicating the minimum scheduling offset preferred by the terminal with respect to the subcarrier spacing, wherein the subcarrier spacing includes at least one of 480 kHz or 960 kHz, the first message further includes third information for configuration of reporting a minimum scheduling offset preferred by the terminal with respect to a subcarrier spacing different from the subcarrier spacing for FR 2-2, and the first information and the third information are different.

A terminal according to another embodiment of the disclosure may include: a transceiver; and a controller connected to the transceiver, wherein the controller is configured to: receive, from a base station, a first message including first information for configuration of reporting a minimum scheduling offset preferred by the terminal with respect to a subcarrier spacing for frequency range (FR) 2-2; and transmit, to the base station, a second message including second information that is assistance information indicating the minimum scheduling offset preferred by the terminal with respect to the subcarrier spacing, and wherein the subcarrier spacing includes at least one of 480 kHz or 960 kHz, the first message further includes third information for configuration of reporting a minimum scheduling offset preferred by the terminal with respect to a subcarrier spacing different from the subcarrier spacing for FR 2-2, and the first information and the third information are different.

A base station according to another embodiment of the disclosure may include: a transceiver; and a controller connected to the transceiver, wherein the controller is configured to: transmit, to a terminal, a first message including first information for configuration of reporting a minimum scheduling offset preferred by the terminal with respect to a subcarrier spacing for frequency range (FR) 2-2; and receive, from the terminal, a second message including second information that is assistance information indicating the minimum scheduling offset preferred by the terminal with respect to the subcarrier spacing, and wherein the subcarrier spacing includes at least one of 480 kHz or 960 kHz, the first message further includes third information for configuration of reporting a minimum scheduling offset preferred by the terminal with respect to a subcarrier spacing different from the subcarrier spacing for FR 2-2, and the first information and the third information are different.

### [Advantageous Effects of Invention]

The disclosure provides a device and a method capable of providing information on a terminal in a wireless communication system.

### [Brief Description of Drawings]

FIG. 1 is a diagram illustrating a structure of an NR system according to an embodiment of the disclosure;
FIG. 2 is a diagram illustrating a radio protocol structure in LTE and NR systems according to an embodiment of the disclosure;
FIG. 3 is a diagram illustrating a procedure of requesting and reporting UE assistance information (UAI) between a terminal and a base station according to an embodiment of the disclosure;
FIG. 4 is a diagram illustrating names and ranges of frequency domains defined in NR and subcarrier spacing (SCS) values available in each domain according to an embodiment of the disclosure;
FIG. 5 is a diagram illustrating an example of UE capability information for indicating whether a terminal is able to report, to a base station, a terminal preference for a minimum scheduling offset for each SCS and a terminal preference for a maximum SCS value in relation to a power-saving operation, according to an embodiment of the disclosure;
FIG. 6 is a diagram illustrating an example of UE assistance information newly defined so that a terminal is able to report a terminal preference for a maximum SCS value in relation to a power-saving operation, according to an embodiment of the disclosure;
FIG. 7 is a diagram illustrating an example of UE assistance information newly defined so that a terminal is able to report a terminal preference for a minimum scheduling offset value for each 480 kHz SCS and each 960 kHz SCS in relation to a power-saving operation, according to an embodiment of the disclosure;
FIG. 8 is a diagram illustrating an example of base station configuration information for indicating a terminal to report a terminal preference for a maximum SCS value in relation to a power-saving operation, according to an embodiment of the disclosure;
FIG. 9 is a diagram illustrating an example of base station configuration information for indicating a terminal to report a terminal preference for a minimum scheduling offset value for each 480 kHz SCS and each 960 kHz SCS in relation to a power-saving operation, according to an embodiment of the disclosure;
FIG. 10 is a diagram illustrating a procedure of requesting and reporting UE assistance information including a terminal preference for a maximum SCS value between a terminal and a base station, and reconfiguring a terminal connection accordingly, according to an embodiment of the disclosure;
FIG. 11 is a diagram illustrating a procedure of requesting and reporting UE assistance information including a terminal preference for a minimum scheduling offset value for each SCS between a terminal and a base station, and reconfiguring a terminal connection accordingly, according to an embodiment of the disclosure;
FIG. 12 is a diagram illustrating a terminal device according to an embodiment of the disclosure; and
FIG. 13 is a diagram illustrating a base station device according to an embodiment of the disclosure.

### [Mode for the Invention]

Hereinafter, embodiments of the disclosure will be described in detail with reference to the accompanying drawings. In the following description of the disclosure, detailed descriptions of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the "unit" refers to a software element or a hardware element, such as a Field Programmable Gate Array (FPGA) or an Application Specific Integrated Circuit (ASIC), which performs a predetermined function. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in the embodiments may include one or more processors.

In the following description of the disclosure, detailed descriptions of known functions or configurations incorporated herein will be omitted when it is determined that the description may make the subject matter of the disclosure unnecessarily unclear. Hereinafter, embodiments of the disclosure will be described with reference to the accompanying drawings.

In the following description, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as described below, and other terms referring to subjects having equivalent technical meanings may also be used.

In the following description, the terms "physical channel" and "signal" may be interchangeably used with the term "data" or "control signal". For example, the term "physical downlink shared channel (PDSCH)" refers to a physical channel over which data is transmitted, but the PDSCH may also be used to refer to the "data". That is, in the disclosure, the expression "transmit ting a physical channel" may be construed as having the same meaning as the expression "transmitting data or a signal over a physical channel".

In the following description of the disclosure, upper signaling refers to a signal transfer scheme from a base station to a terminal via a downlink data channel of a physical layer, or from a terminal to a base station via an uplink data channel of a physical layer. The upper signaling may also be understood as radio resource control (RRC) signaling or a media access control (MAC) control element (CE).

In the following description of the disclosure, terms and names defined in the 3rd generation partnership project new radio (3GPP NR) or 3GPP long term evolution (3GPP LTE) standards will be used for the sake of descriptive convenience. However, the disclosure is not limited by these terms and names, and may be applied in the same way to systems that conform other standards. In the disclosure, the term "next generation node B (gNB)" may be interchangeably used with the term "evolved node B (eNB)" for the sake of descriptive convenience. That is, a base station described as "eNB" may indicate "gNB". Furthermore, the term "terminal" may refer to not only a mobile phone, an MTC device, an NB-IoT device, and a sensor, but also other wireless communication devices.

In the following description, a base station is an entity that allocates resources to terminals, and may be at least one of a gNode B (gNB), an eNode B (eNB), a Node B, a base station (BS), a wireless access unit, a base station controller, and a node on a network. A terminal may include a user equipment (UE), a mobile station (MS), a cellular phone, a smartphone, a computer, or a multimedia system capable of performing a communication function. Of course, examples of the base station and the terminal are not limited to those mentioned above.

The disclosure relates to a method and a device, by which a terminal reports UE assistance information related to power-saving operations to a base station in a next-generation wireless communication system. More specifically, the disclosure relates to a method and a device for, in 3GPP 5G new radio (NR), as the previous operation range of the NR, which is limited to a band equal to or lower than 52.6 gigahertz (GHz), has been expanded to 71 GHz, and additional values of 480kHz and 960kHz are newly introduced in addition to subcarrier spacing (SCS) values (e.g., 15 kHz, 30 kHz, 60 kHz, and 120 kHz) previously supported for user data transmission, reporting UE assistance information that is additionally required for efficient power saving operation of a terminal.

The disclosure describes a method for reporting a terminal preference for a minimum scheduling offset for each SCS and a terminal preference for a maximum SCS value for efficient power saving operation of a terminal in a wireless communication system. To this end, specifically, the disclosure describes a UE capability information reporting method indicating whether to support reporting of the information, a method for, after a base station identifies UE capability information, configuring a supportable terminal to report the UE assistance information, and a method of reporting the terminal preference for the minimum scheduling offset for each SCS and a terminal preference for an SCS value according to base station configuration.

Via the disclosure, the terminal may report, to the base station, the terminal preference for the maximum SCS value in relation to power saving operation. The base station may configure the terminal to use an SCS value equal to or lower than a certain level by referring to the information reported by the terminal, so that the base station may avoid additional energy consumption occurring when the terminal is configured to use an SCS value that is too high, for example, when the terminal is configured to perform a fast Fourier transform (FFT) operation required for orthogonal frequency-division multiplexing (OFDM) demodulation during a symbol duration that is too short.

Additionally, the terminal may report, to the base station, a terminal preference for a minimum scheduling offset value for each SCS in relation to power saving operation. In particular, a separate preference may be reported also for newly supported SCS values (e.g., 480 kHz and 960 kHz) in addition to SCS values (e.g., 15 kHz, 30 kHz, 60 kHz, and 120 kHz) previously supported for user data transmission. The base station may perform scheduling by referring to the information reported by the terminal so that, when each SCS value is used, a minimum scheduling offset time reported by the terminal with respect to a corresponding SCS value is satisfied, thereby ensuring an uplink data transmission operation in a physical uplink shared channel (PUSCH) and a downlink data reception operation in a PDSCH after processing all DCI information received on a PDDCH by the terminal. Accordingly, unnecessary energy waste that may occur due to an insufficient DCI information processing time at the terminal end may be prevented.

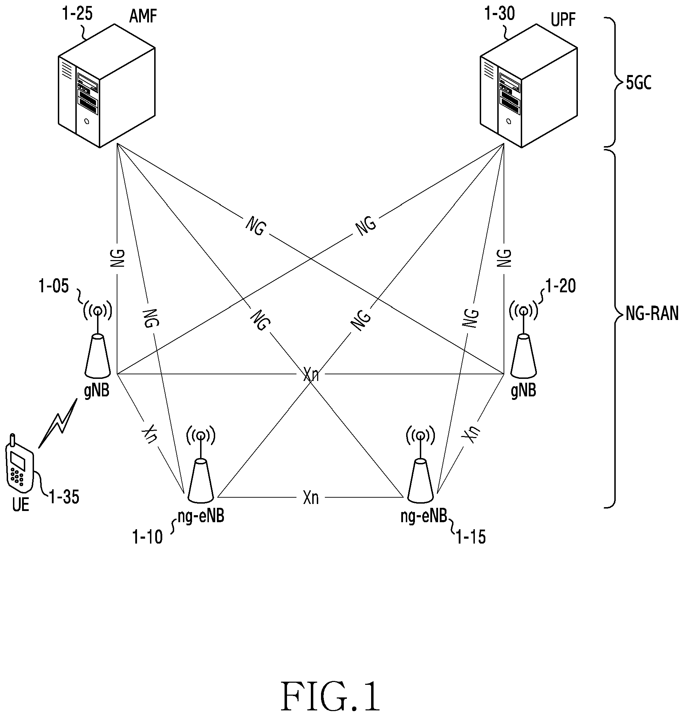

FIG. 1 is a diagram illustrating a structure of an NR system according to an embodiment of the disclosure.

Referring to FIG. 1, a wireless communication system may include multiple base stations (e.g., a gNB 1-05, an ng-eNB 1-10, an ng-eNB 1-15, and a gNB 1-20), an access and mobility management function (AMF) 1-25, and a user plane function (UPF) 1-30. A user equipment (hereinafter, UE or terminal) 1-35 may access an external network via the base stations (e.g., the gNB 1-05, the ng-eNB 1-10, the ng-eNB 1-15, and the gNB 1-20) and the UPF 1-30.

In FIG. 1, the base stations (e.g., the gNB 1-05, the ng-eNB 1-10, the ng-eNB 1-15, and the gNB 1-20) are access nodes of a cellular network and may provide radio access to terminals accessing the network. For example, in order to service traffic of users, the base stations (e.g., the gNB 1-05, the ng-eNB 1-10, the ng-eNB 1-15, and the gNB 1-20) may collect state information, such as buffer states, available transmission power states, and channel states, of terminals and perform scheduling to support connections between the terminals and a core network (CN, in particular, CN of NR is referred to as 5G core (5GC)). In communication, a user plane (UP) related to actual user data transmission and a control plane (CP), such as connection management, may be separately configured. In FIG. 1, the gNB 1-05 and the gNB 1-20 may use UP and CP technology defined in NR technology, and although the ng-eNB 1-10 and the ng-eNB 1-15 are connected to a 5GC, the ng-eNBs may use UP and CP technology defined in LTE technology.

In FIG. 1, the AMF 1-25 is a device responsible for various control functions as well as a mobility management function for a terminal, and is connected to the multiple base stations, and the UPF 1-30 may refer to a type of gateway device that provides data transmission. Although not illustrated in FIG. 1, the NR wireless communication system may include a session management function (SMF). The SMF may manage a packet data network connection, such as a protocol data unit (PDU) session provided to a terminal.

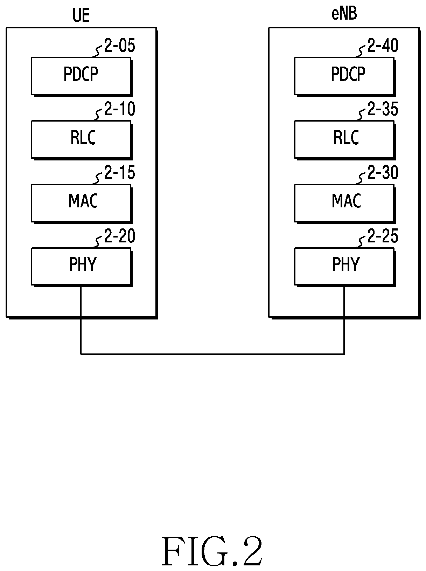

FIG. 2 is a diagram illustrating a radio protocol structure in LTE and NR systems according to an embodiment of the disclosure.

Referring to FIG. 2, a radio protocol of an LTE system may include packet data convergence protocols (PDCPs) 2-05 and 2-40, radio link controls (RLCs) 2-10 and 2-35, and medium access controls (MACs) 2-15 and 2-30 in a terminal and an eNB, respectively. The PDCPs 2-05 and 2-40 are responsible for operations, such as IP header compression/restoration, and the RLCs 2-10 and 2-35 reconfigures a PDCP protocol data unit (PDU) to an appropriate size. The MACs 2-15 and 2-30 are connected to multiple RLC layer devices included in one terminal, and multiplex RLC PDUs on a MAC PDU and demultiplex the RLC PDUs from the MAC PDU. Physical (PHY) layers 2-20 and 2-25 perform channel coding and modulation on higher-layer data, make the data into OFDM symbols, and transmit the same via a wireless channel, or perform demodulation and channel decoding on the OFDM symbols received via the wireless channel and transfer the same to a higher layer. In addition, the physical layers also use a hybrid automatic repeat request (HARQ) for additional error correction, and a reception end transmits, using 1 bit, information on whether a packet transmitted by a transmission end is received. This is referred to as acknowledgement/non-acknowledgement (HARQ ACK/NACK) information. In LTE, downlink HARQ ACK/NACK information for uplink data transmission is transmitted via a physical hybrid-ARQ indicator channel (PHICH) that is a physical channel, and in NR, whether retransmission is required or whether to perform new transmission may be determined via scheduling information of a corresponding terminal in a physical downlink control channel (PDCCH) that is a channel via which downlink/uplink resource allocation, etc. are transmitted. This is because asynchronous HARQ is applied in NR. Uplink HARQ ACK/NACK information for downlink data transmission may be transmitted via a physical channel, such as a physical uplink control channel (PUCCH) or a physical uplink shared channel (PUSCH). The PUCCH is generally transmitted in an uplink of a primary cell (PCell), which will be described later. However, when supported by a terminal, a base station may perform additional transmission to the terminal in a secondary cell (SCell), which will be described later, and the SCell in this case is referred to as a PUCCH SCell.

Although not illustrated in FIG. 2, radio resource control (RRC) layers are present above the PDCP layers of the terminal and the base station, respectively, and access and measurement-related configuration control messages for radio resource control may be exchanged in the RRC layers.

The PHY layer may include one or multiple frequencies/carriers, and a technology of concurrently configuring and using multiple frequencies is referred to as a carrier aggregation technology (hereinafter, referred to as CA). In the CA technology, instead of using only one carrier for communication between a terminal (or user equipment (UE)) and a base station (eNB), one main carrier and one or multiple sub-carriers are additionally used so that the amount of transmission may be dramatically increased by the number of sub-carriers. In LTE, a cell in a base station, which uses a main carrier, is referred to as a primary cell or a PCell, and a cell in a base station, which uses a sub-carrier, is referred to as a secondary cell or an SCell.

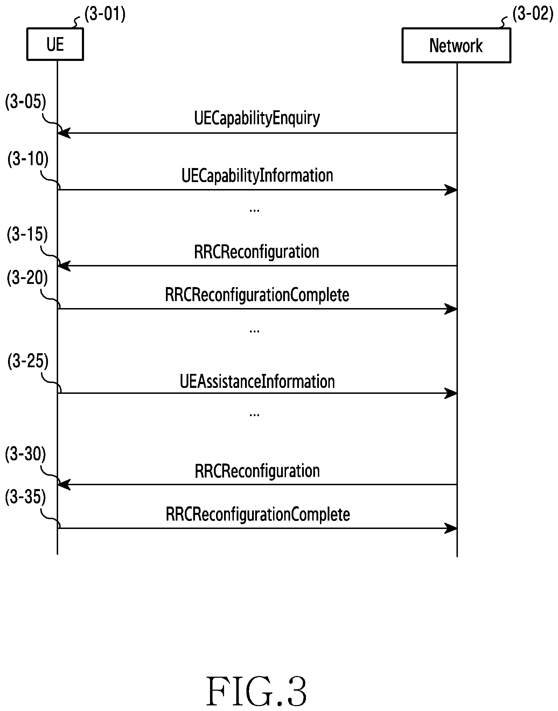

FIG. 3 is a diagram illustrating a procedure of requesting and reporting UE assistance information (UAI) between a terminal and a base station according to an embodiment of the disclosure.

Referring to FIG. 3, a terminal 3-01 may report UE assistance information related to power saving operation to a base station while being connected to a network (or serving base station) 3-02 (hereinafter, referred to as a base station), and based on this, the base station may control power saving operation at the terminal end and reconfigure a connection to satisfy a required data service.

- In operation 3-05, the base station 3-02 may transfer, to the connected terminal 3-01, a UE capability request (UECapabilityEnquiry) message for requesting to report a capability. The base station 3-02 may include, in the UECapabilityEnquiry message, a UE capability request for each radio access technology (RAT) type. The request for each RAT type may include requested frequency band information. In addition, for the UECapabilityEnquiry message, multiple RAT types may be requested in one RRC message container. Alternatively, the base station 3-02 may transfer the UECapabilityEnquiry message including a request for each RAT type to the terminal 3-01 multiple times. That is, the UECapabilityEnquiry message in operation 3-05 may be transmitted once or multiple times. In addition, in operation 3-05, when the base station 3-01 requests the terminal 3-02 to generate a UECapabilityInformation message, filtering information capable of indicating conditions and restrictions may be included. Even if the terminal has a large capability, if the base station is unable to process and support the capability, reception of a report on the capability of the terminal may be meaningless. Therefore, the base station may limit the capability of the terminal, which is reported by the terminal, in order to receive only UE capability information necessary for the base station. In this way, the base station may limit the UE capability reported by the terminal, so that the size of the UECapabilityInformation message reported by the terminal may be reduced.

- In operation 3-10, the terminal 3-01 may configure a UECapabilityInformation message corresponding to the UECapabilityEnquiry message, and may match a response to the request and report the same to the base station 3-02. In the next-generation mobile communication system, UE capabilities for NR, LTE, evolved-universal terrestrial radio access new radio dual-connectivity (EN-DC), and multi-radio dual-connectivity (MR-DC) may be requested. For reference, the UE capability request (UECapabilityEnquiry) message may be initially transmitted after the terminal is connected and the base station identifies the connection. However, when required by the base station, under any conditions, the base station may request a UE capability from the terminal.

In addition, a UE capability relating to reporting of UE assistance information may be included in the message in operation 3-10. Based on this, in operation 3-15, the base station may configure the terminal to report necessary UE assistance information.

- In operation 3-15, the base station 3-02 may transfer necessary connection configuration information to the terminal 3-01. In this case, the base station may configure, based on the UE capability information reported by the terminal in operation 3-10, the terminal to report UE assistance information reportable by the terminal.

- In operation 3-20, the terminal 3-01 may notify that the configuration information transferred by the base station 3-02 in operation 3-15 is received and then applied.

- In operation 3-25, when an operation condition for UE assistance information (UAI) reporting is satisfied, the terminal 3-01 may add the necessary UE assistance information to a UEAssistanceInformation message according to the configuration information transferred by the base station in operation 3-15, and then transfer the message to the base station 3-02. In this case, information relating to power saving may be included.

- In operation 3-30, the base station 3-02 may transfer modified connection configuration information to the terminal, based on the UE assistance information reported by the terminal 3-01 in operation 3-25. As an example, when the UE assistance information has been reported to the base station via the UEAssistanceInformation message in operation 3-25, and UE assistance information relating to power saving is included in the message, the base station may transfer, in operation 3-30 to the terminal, new connection configuration information for reconfiguring the number of carriers, a bandwidth, the number of MIMO layers, SCS values of a serving cell, a scheduling offset value for each SCS value, etc., which are used for the terminal connection, based on the information relating to the power saving.

- In operation 3-35, the terminal may notify that the configuration information transferred by the base station in operation 3-30 is received and then applied.

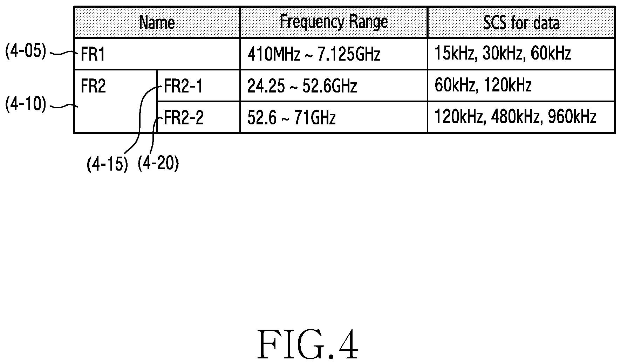

FIG. 4 is a diagram illustrating names and ranges of frequency domains defined in NR and SCS values available in each domain according to an embodiment of the disclosure.

Referring to FIG. 4, in the NR system, frequencies may be broadly divided into a frequency range 1 (FR1) 4-05 and a frequency range 2 (FR2) 4-10. In addition, an FR2 band is further divided into an FR2-1 4-15 band and an FR2-2 4-20 band. In the FR1 band, SCS values such as 15 kHz, 30 kHz, and 60 kHz, may be used for user data transmission. In the FR2-1 band, SCS values, such as 60 kHz and 120 kHz, may be used for user data transmission. In the FR2-2 band, SCS values such as 120 kHz, 480 kHz, and 960 kHz, may be used for user data transmission. 480 kHz and 960 kHz among the SCS values used in the FR2-2 band are newly introduced values as an operation range of NR is extended to the FR2-2 band in Release 17.

In 3GPP Rel-17, a standard is being defined to extend the operation range of NR to 71 GHz, and content as shown in [Table 1] below is defined in work item description (WID) of a corresponding work item (WI).

**[Table 1]**

| **From WID RP-210862** |
|---|
| Note 5: FR2 is extended to cover 24.25GHz to 71GHz with FR2-1 for 24.25-52.6GHz and FR2-2 for 52.6-71GHz. |
| * The related UE capabilities and their applicability to the frequency range 52.6 to 71 GHz will have to be analyzed on a case-by-case basis |
| * The application of any of the UE feature introduced for 52.6-71 GHz to existing FR1/FR2 should be discussed case by case. |
| * TSG RAN specifications shall make it very clear (to readers) that frequency bands in the 52.6-71GHz range are only Release-independent from Rel-17 onwards, to ensure that there is clear industry understanding about which FR2 features are applicable for operation in 52.6-71GHz range. |
| NOTE 5a: Whenever the FR2 is referred, both FR2-1 and FR2-2 frequency sub-ranges shall be considered in this release, unless otherwise stated. |
| NOTE 5b: The designations FR2-1 and FR2-2 should only be used when needed. |

Referring to [Table 1], in order to extend the FR2 band to include 24.25 GHz to 71 GHz bands, the frequency range (24.25 GHz to 52.6 GHz) previously defined as the FR2 band up to Rel-16 is newly defined as FR2-1, and the newly extended frequency range (52.6 GHz to 71 GHz) is defined as FR2-2. In addition, functionally, the WI includes introducing new SCS values of 480 kHz and 960 kHz to extend the operation range of NR to the FR2-2 band and defining a new maximum bandwidth. In addition, currently, an agreement has been made on the use of 480 kHz SCS and 960 kHz SCS in the FR2-2 band in 3GPP RAN1. When the newly defined 960 kHz SCS value is used, a symbol duration may be shortened by up to 64 times compared to when the previously used minimum SCS value (15 kHz) is used. This large gap in symbol duration values may also affect power saving operation of a terminal. For example, the symbol duration of the terminal being shortened by up to 64 times may indicate that an FFT operation performed for OFDM demodulation in a terminal end chip set should be performed up to 64 times faster, and this may increase energy consumption in the terminal end.

Therefore, in the disclosure, when the terminal reports necessary UE assistance information to the base station in relation to power saving operation, a power saving-related parameter in the UE assistance information is newly defined so as to enable reporting of information additionally required as new SCS values (e.g., 480 kHz and 960 kHz) are introduced. In addition, a new UE capability parameter is defined to inform the base station whether the terminal is able to use newly defined parameters, and after identifying the UE capability parameter, the base station also defines a new parameter to indicate the terminal to report newly added information.

According to various embodiments of the disclosure, the terminal may separately report a terminal preference for a maximum SCS value in UE assistance information related to power saving and a terminal preference for a minimum scheduling offset for each SCS. Based on this, in order to optimize power saving operation of the terminal, the base station may reconfigure SCS values used in a serving cell, which are configured for the terminal, or may adjust scheduling offset values (e.g., K0 and K2) used during inter-slot scheduling.

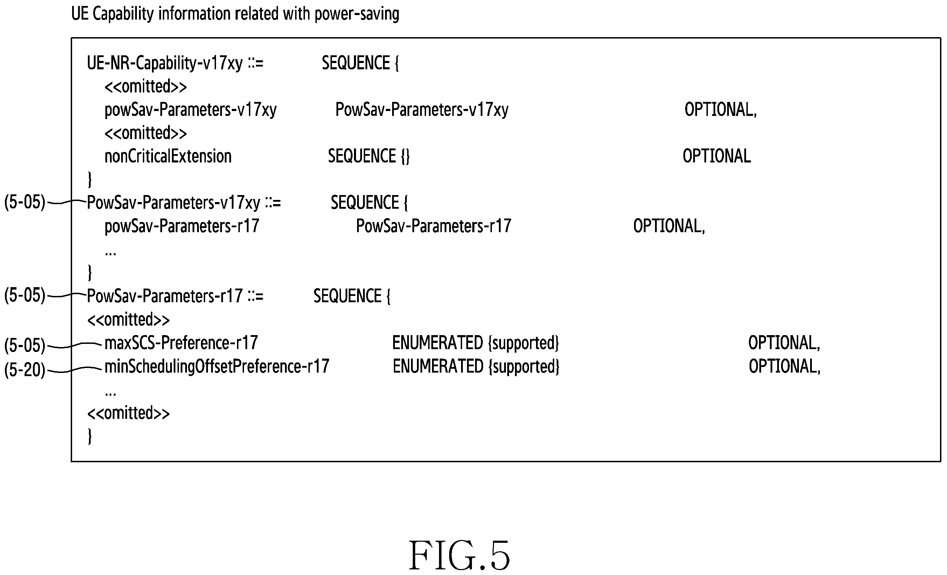

FIG. 5 is a diagram illustrating an example of UE capability information for indicating whether a terminal is able to report, to a base station, a terminal preference for a minimum scheduling offset for each SCS and a terminal preference for a maximum SCS value in relation to a power-saving operation, according to an embodiment of the disclosure.

Referring to FIG. 5,
(1) As in maxSCS-Preference 5-05, when a terminal reports UE capability information to a base station, if UE assistance information for power saving in also included, parameter 5-10 PowSav-Parameters-r17 which indicates whether the terminal is able to report information additionally defined in the disclosure for power saving optimization may be included.
(2) The newly defined parameter, such as parameter 5-10, may include each of an indicator 5-15 (maxSCS-Preference) for whether a maximum SCS value is reportable and an indicator 5-20 (minSchedulingOffsetPreference-r17) for whether a minimum scheduling offset for the newly introduced SCS values (480 kHz and 960 kHz) is reportable. The described indicators may be defined to be 1-bit information in an enumerated or Boolean form.

Terms representing the parameters and indicators described with reference to FIG. 5 are terms defined to be applicable to various embodiments of the disclosure, and may vary according to the intention of a user or operator, practice, or the like.

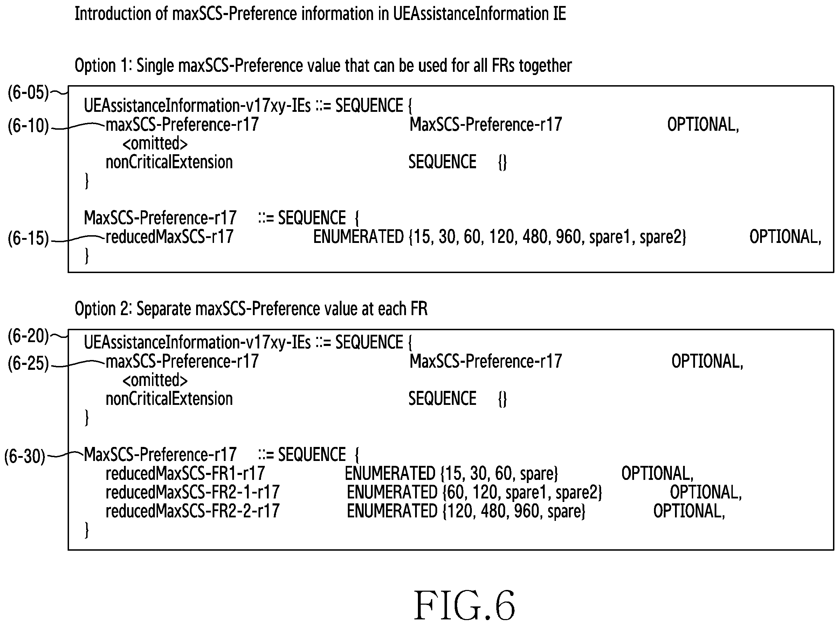

FIG. 6 is a diagram illustrating an example of UE assistance information newly defined so that a terminal is able to report a terminal preference for a maximum SCS value in relation to a power-saving operation, according to an embodiment of the disclosure.

Referring to FIG. 6, newly defined UE assistance information related to a maximum SCS value may be defined using one of the two options 6-05 or 6-20 described below. Depending on the option, whether a separate preference for the maximum SCS value is reportable for each frequency band may vary.
(1) Option 1 6-05: A method of reporting a terminal preference for a maximum SCS value that is commonly applied to all bands (FR1, FR2-1, and FR2-2) regardless of a frequency band.
(1-1) A parameter 6-10 (e.g., maxSCS-Preference-r17) indicating the preference for the maximum SCS value may be included in UE Assistance Information reported by a terminal.
(1-2) The terminal may report a parameter 6-15 (e.g., reducedMaxSCS-r17) to indicate the terminal preference for the maximum SCS value commonly applied to all frequency bands in relation to power saving.
(1-3) The parameter 6-15 may be defined in a 3-bit enumerated form to indicate one of SCS values (e.g., 15 kHz, 30 kHz, 60 kHz, 120 kHz, 480 kHz, and 960 kHz) available for user data transmission. (Depending on future circumstances, 240 kHz or other values may be added to the values expressed by the indicator.)
(1-4) When using this option, the terminal may report one maximum SCS value to a base station by using 3 bits. In addition, for the information reported in this way, not only just the terminal preference for the maximum SCS value may be transferred, but also information on a frequency band preferred by the terminal according to the combination of available SCSs for each frequency band in FIG. 4 may be transferred. For example, when the terminal indicates (or reports) 60 kHz as the maximum SCS value, the base station may also indirectly identify information that the terminal does not want to use the FR2-2 band which does not support an SCS value below 60 kHz.
(2) Option 2 6-20: A method of individually reporting a terminal preference for a maximum SCS value applied to each frequency band (FR1, FR2-1, or FR2-2)
(2-1) A parameter 6-25 (e.g., maxSCS-Preference-r17) indicating the preference for the maximum SCS value may be included in UE Assistance Information reported by a terminal.
(2-2) The terminal may report parameters (e.g., parameters included in a parameter 6-30, which are reducedMaxSCS-FR1-r17, reducedMaxSCS-FR2-1-r17, and reducedMaxSCS-FR2-2-r17) to individually indicate the terminal preference for the maximum SCS value applied to frequency bands in relation to power saving, respectively.
(2-3) The parameters 6-30 may be defined in a 2-bit enumerated form for each frequency band because there are up to three SCS values available for user data transmission in each frequency band according to FIG. 4. Specifically, a 2-bit indicator (e.g., reducedMaxSCS-FR1-r17) to indicate one of 15 kHz, 30 kHz, and 60 kHz SCS values may be defined in the FR1 band, a 1-bit or 2-bit indicator to indicate one of 60 kHz and 120 kHz may be defined in the FR2-1 band, and a 2-bit indicator to indicate one of 120 kHz, 480 kHz, and 960 kHz may be defined in the FR2-2 band. (Depending on future circumstances, for each band, other values not included in the examples above may be added to the values expressed by the respective indicators.)
(2-4) When using this option, the terminal may transfer the maximum SCS value preferred for each frequency band to a base station by using 5 to 6 bits. In this case, compared to option 1, about 2 to 3 bits may be additionally used. On the other hand, individually indicating a preference for an SCS value for each frequency band may be helpful for the base station to reconfigure SCS for each band.

For power saving operation of the terminal, the terminal may report, to the base station, a preference for scheduling offset K0/K2 (K0 is an offset between a time point at which downlink control information (DCI) is transmitted on a PDCCH and a time point at which downlink data indicated by the DCI is transmitted on a PDSCH, and K2 is an offset between a time point at which DCI is transmitted on a PDCCH and a time point at which uplink data indicated by the DCI is transmitted on a PUSCH). The base station may help power saving operation of the terminal by applying, to scheduling, the preference for the scheduling offset, which is reported by the terminal. For example, after DCI indicating downlink data transmission is received on a PDCCH, the terminal may require a certain amount of time or more to process information in the DCI. If downlink transmission on a PDSCH mapped to the DCI starts before the terminal processes the DCI, since the terminal has not yet obtained the presence or absence of downlink data transmitted to the terminal on the PDSCH and transmission resource position information, the terminal needs to receive all downlink link data transmitted on the PDSCH and then store the same in a memory. In addition, this operation may increase energy consumption of the terminal.

In order to avoid this increase in energy consumption, the terminal may report a preference for a minimum required scheduling offset K0 (i.e., an offset between a time point at which DCI is transmitted on a PDCCH and a time point at which downlink data indicated by the DCI is transmitted on a PDSCH) value to the base station. Based on corresponding information, the base station may guarantee a time interval of a certain amount or more between a time point at which DCI is transmitted on a PDCCH and corresponding downlink link transmission on a PDSCH (i.e., the minimum scheduling offset K0 value requested by the terminal is guaranteed), so that the terminal may secure a time required for processing DCI transmitted on the PDCCH.

For the reasons above, when the terminal reports the preference for the minimum scheduling offset K0/K2 value to the base station, since the minimum scheduling offset K0/K2 value required by the terminal may vary depending on an SCS value actually used in each frequency resource, the preferred minimum scheduling offset value for each configurable SCS value may be reported individually. In addition, because a symbol length and a slot length vary depending on the SCS value, the terminal preference for the minimum scheduling offset value may be expressed in units of slots. The 3GPP Rel- 16 NR standard (e.g., TS 38.331) defines that terminal-preferred K0 and K2 values for each existing SCS value (e.g., 15 kHz, 30 kHz, 60 kHz, or 120 kHz, hereinafter, expressed as SCS set1) are reported individually. However, there is no defined method for reporting a separate minimum scheduling offset value for the SCS values (e.g., 480kHz and 960kHz, hereinafter, expressed as SCS set2) newly introduced as the operation range of NR is extended to the FR2-2 band. If the terminal is unable to report a separate minimum scheduling offset value for the SCS values belonging to SCS set2, energy consumption of the terminal may increase when using the SCS value. Accordingly, the disclosure describes a method for reporting a separate minimum scheduling offset value for a newly introduced SCS value (e.g., 480 kHz or 960 kHz).

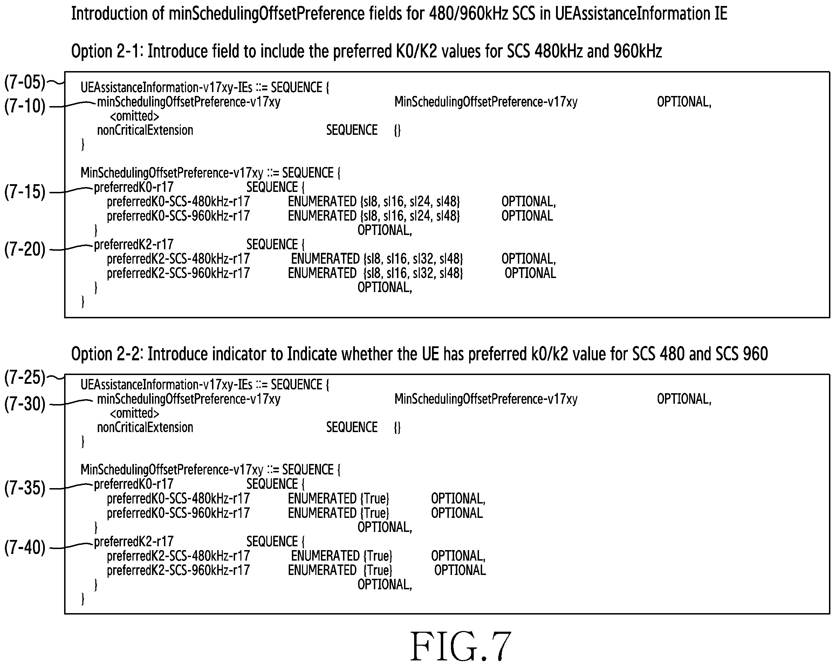

The following two options may be used as methods for a terminal to individually report a preference of a minimum scheduling offset value when using SCS set2.
(1) Option 1: Method of using only UE assistance information for previously defined SCS set1 without defining an additional parameter
(1-1) A terminal may not report information on a separate minimum scheduling offset preference for SCS set2.
(1-2) When the terminal indicates supporting of Rel-17 via the UE capability information reported to the base station in 3-10, the base station may determine a scheduling offset when SCS set2 is used, based on the terminal preference given for SCS set1, which is reported in operation 3-25. If the terminal does not support Rel-17, the use of 480 kHz SCS and 960 kHz SCS in the FR2-2 band is not supported, so that the base station does not need to determine, for the terminal, a scheduling offset when SCS set2 is used.
(1-3) In order for the base station to determine, based on the terminal preference given for SCS set1, a scheduling offset when newly introduced SCS set2 is used, the correlation between the preference given for the existing SCS set1 and the preference given for newly introduced SCS set2 may be defined in the standard as shown in the example below.
(1-3-1) Example 1) The correlation may be defined so that a value indicated by the parameter (e.g., preferredK0-SCS-120kHz-r16 and preferredK2-SCS-120kHz-r16) given for existing 120 kHz SCS is applied as it is to 480 kHz SCS and 960 kHz SCS. If the value indicated by the parameter is A slots, the base station may define the correlation so that the minimum scheduling offset value required by the terminal is A slots also for 480 kHz SCS and 960 kHz SCS. However, in this case, as an SCS value increases, a slot length decreases, so that, if a time expressed as A slots when 120 kHz SCS is actually used is B milliseconds (msecs), a time corresponding to A slots when 480 kHz SCS is used decreases to B/4 msecs, and a time corresponding to A slots when 960 kHz SCS is used decreases to B/8 msecs. If it can be assumed that a time required for the terminal to process DCI is reduced in proportion to an SCS value, the value given for 120 kHz SCS may be applied, as it is, to SCS belonging to SCS set2 without separate parameter definition and reporting as described above.
(1-3-2) Example 2) The correlation may be defined so that a value, which is obtained by increasing the value indicated by the parameter (preferredK0-SCS-120kHz-r16 and preferredK2-SCS-120kHz-r16) given for existing 120 kHz SCS in proportion to an SCS value, is the preference for 480 kHz SCS and 960 kHz SCS. If the value indicated by the parameter for 120 kHz SCS is A slots, the base station may define the correlation so that the minimum scheduling offset values required by the terminal for 480 kHz SCS and 960 kHz SCS are 4A slots and 8A slots, respectively. In this case, even if the slot length decreases as the SCS value increases, a minimum scheduling offset time indicated by the corresponding value may remain the same. If the time expressed as A slots is B msecs when 120 kHz SCS is actually used, a time corresponding to 4A slots when 480 kHz SCS is used and a time corresponding to 8A slots when 960 kHz SCS is used are also maintained to have the same value of B msecs. If it can be assumed that the time required for the terminal to process DCI does not change significantly according to the SCS value, the value given for 120 kHz SCS may be applied to SCS belonging to SCS set2 by a scheme of increasing the value in proportion to the SCS value, without separate parameter definition and reporting as described above.
(1-4) When this option is used, the minimum scheduling offset value for SCS set2 may be reported using the minimum scheduling offset value reported for SCS set1, without defining and reporting new parameters for SCS belonging to SCS set2.
(2) Option 2: Method of separately reporting a minimum scheduling offset value required in SCS set2 via additional parameter definition
(2-1) A terminal may report, to the base station, information on separate minimum scheduling offset preference for each SCS belonging to SCS set2.
(2-2) When the terminal indicates that the terminal supports reporting of minimum scheduling offset preference information for SCS set2, via the UE capability information reported to the base station in 3-10, the base station may indicate the terminal to report the minimum scheduling offset preference for SCS set2 via 3-15. Conversely, if the terminal reports that the terminal does not support reporting of the minimum scheduling offset preference information for SCS set2, the base station cannot indicate reporting of the minimum scheduling offset preference for SCS set2. When reporting of the minimum scheduling offset preference for SCS set2 is indicated by the base station, the terminal may report the information by including the same in the UE assistance information in operation 3-25.
(2-3) A specific example of a method of newly defining the minimum scheduling offset preference information for SCS set2 in the UE assistance information follows the description in FIG. 7 below.

Terms representing the parameters and indicators described with reference to FIG. 6 are terms defined to be applicable to various embodiments of the disclosure, and may vary according to the intention of a user or operator, practice, or the like.

FIG. 7 is a diagram illustrating an example of UE assistance information newly defined so that a terminal is able to report a terminal preference for a minimum scheduling offset value for each 480 kHz SCS and 960 kHz SCS in relation to a power-saving operation, according to an embodiment of the disclosure.

Referring to FIG. 7, two options are illustrated, wherein option 2-1 7-05 and option 2-2 7-25 are the two options available when UE assistance information is newly defined so as to enable reporting of terminal preferences for minimum scheduling offset values in 480 kHz SCS and 960 kHz SCS (hereinafter, referred to as SCS set2).
(1) Option 2-1 7-05: Method of directly reporting a minimum scheduling offset preference value for SCS set2
(1-1) UE assistance information may include a parameter 7-10 (e.g., minSchedulingOffsetPreference-v17xy) to separately inform a minimum scheduling offset value for SCS set2.
(1-2) minSchedulingOffsetPreference-v17xy 7-10 may include a parameter 7-15 (e.g., preferredK0-r17) for a preferred K0 value and a parameter 7-20 (e.g., preferredK2 -r17) for a preferred K2 value.
(1-3) preferredK0-r17 7-15 may include each of a parameter (e.g., preferredKO-SCS-480kHz-r17) indicating a preferred K0 value for 480 kHz SCS and a parameter (e.g., preferredK0-SCS-960kHz-r17) indicating a preferred K0 value for 960 kHz SCS.
(1-4) preferredK2-r17 7-20 may include each of a parameter (e.g., preferredK2-SCS-480kHz-r17) indicating a preferred K2 value for 480 kHz SCS and a parameter (e.g., preferredK2-SCS-960kHz-r17) indicating a preferred K2 value for 960 kHz SCS.
(1-5) Each of the four parameters (e.g., preferredK0-SCS-480kHz-r17, preferredKO-SCS-960kHz-r17, preferredK2-SCS-480kHz-r17, and preferredK2-SCS-960kHz-r17) included in preferredK0-r17 7-15 and preferredK2-r17 7-20 may be defined to be a 2-bit enumerator to indicate one of four values expressed in units of units. In addition, a combination of values which may be indicated by the respective parameters may be one of the examples given below.

- Examples of the combination: {sl1, sl2, sl4, sl6}, {sl2, sl4, sl8, sl12}, {sl4, sl8, sl16, sl24}, {sl8, sl16, sl32, sl48}, {sl16, sl32, sl64, sl96}, {sl1, sl2, sl4, sl8}, {sl2, sl4, sl8, sl16}, {sl4, sl8, sl16, sl32}, {sl8, sl16, sl32, sl64}, and {sl16, sl32, sl64, sl128}

(1-6) When this option is used, the terminal may individually report the preferred K0 and K2 values for respective 480 kHz SCS and 960 kHz SCS by using 8 bits. Based on this, the efficiency of terminal power saving operation may be improved by individually reporting minimum scheduling offset preference-related information for each SCS belonging to SCS set2 separately from information on the existing SCS value (e.g., 15 kHz, 30 kHz, 60 kHz, or 120 kHz SCS, hereinafter, referred to as SCS set1).
(2) Option 2-2 7-25: Method of reporting the presence or absence of a minimum scheduling offset preference for SCS set2
(2-1) UE assistance information may include a parameter 7-30 (e.g., minSchedulingOffsetPreference-v17xy) to separately inform the presence or absence of a minimum scheduling offset preference for SCS set2.
(2-2) minSchedulingOffsetPreference-v17xy 7-30 may include parameters preferredK0-r17 7-35 and preferredK2-r17 7-40 to indicate the presence or absence of preferences for K0/K2 values in SCS set2, respectively.
(2-3) preferredK0-r17 7-35 may include each of a parameter (e.g., preferredKO-SCS-480kHz-r17) indicating the presence or absence of a preference for a K0 value when 480 kHz SCS is used, and a parameter (e.g., preferredK0-SCS-960kHz-r17) indicating the presence or absence of a preference for a K0 value when 960 kHz SCS is used.
(2-4) preferredK2-r17 7-35 may include each of a parameter (e.g., preferredK2-SCS-480kHz-r17) indicating the presence or absence of a preference for a K2 value when 480 kHz SCS is used, and a parameter (e.g., preferredK2-SCS-960kHz-r17) indicating the presence or absence of a preference for a K2 value when 960 kHz SCS is used.
(2-5) Each of the four parameters (e.g., preferredK0-SCS-480kHz-r17, preferredKO-SCS-960kHz-r17, preferredK2-SCS-480kHz-r17, and preferredK2-SCS-960kHz-r17) included in preferredK0-r17 7-15 and preferredK2-r17 7-20 may be defined to be a 1-bit indicator to indicate the presence or absence of the preference of the corresponding value, and may be defined in an enumerator or Boolean form.
(2-6) The four indicators may be used to report, to the base station, the presence or absence of the preference of the minimum scheduling offset value (K0 or K2) when SCS set2 is used.
(2-7) In some cases, when there is no need to use an individual indicator for each of K0 and K2, only two indicators (e.g., preferredK0/2-SCS-480kHz-r17 and preferredK0/2-SCS-480kHz-r17) may be used.
(2-8) In some cases, when there is no need to use an individual indicator for each of 480 kHz and 960 kHz, only two indicators (e.g., preferredK0-SCS-r17 and preferredK2-SCS-r17) may be used.
(2-9) As described above, when the terminal indicates the presence of only the minimum scheduling offset preference for SCS set2, the base station may derive preference values for SCS set2 by using the values (e.g., preferredK0-r16 and preferredK2-r16) reported for existing SCS set1. To this end, the correlation between information on SCS set1 and information on SCS set2 may be defined in the standard as shown in the examples below.
(2-9-1) Example 1) The correlation may be defined so that a value indicated by the parameter (e.g., preferredK0-SCS-120kHz-r16 and preferredK2-SCS-120kHz-r16) given for existing 120 kHz SCS is applied as it is to 480 kHz SCS and 960 kHz SCS. If the value indicated by the parameter is A slots, the base station may define the correlation so that the minimum scheduling offset value required by the terminal is A slots also for 480 kHz SCS and 960 kHz SCS. However, in this case, as an SCS value increases, a slot length decreases, so that, if a time expressed as A slots when 120 kHz SCS is actually used is B msecs, a time corresponding to A slots when 480 kHz SCS is used decreases to B/4 msecs, and a time corresponding to A slots when 960 kHz SCS is used decreases to B/8 msecs.
(2-9-2) Example 2) The correlation may be defined so that a value, which is obtained by increasing the value indicated by the parameter (e.g., preferredK0-SCS-120kHz-r16 and preferredK2-SCS-120kHz-r16) given for existing 120 kHz SCS in proportion to an SCS value, is the preference for 480 kHz SCS and 960 kHz SCS. If the value indicated by the parameter for 120 kHz SCS is A slots, the base station may define the correlation so that the minimum scheduling offset values required by the terminal for 480 kHz SCS and 960 kHz SCS are 4A slots and 8A slots, respectively. In this case, even if the slot length decreases as the SCS value increases, a minimum scheduling offset time indicated by the corresponding value may remain the same. If the time expressed as A slots is B msecs when 120 kHz SCS is actually used, a time corresponding to 4A slots when 480 kHz SCS is used and a time corresponding to 8A slots when 960 kHz SCS is used are also maintained to have the same value of B msecs.
(2-10) When this option is used, the terminal may individually report, using additional 4 bits, the presence or absence of the preferred K0 and K2 values for respective 480 kHz SCS and 960 kHz SCS. The correlation between the information on SCS set1 (e.g., prefferedK0-r16 and prefferedK2-r16) and the information on SCS set2 (e.g., prefferedK0-r17 and prefferedK2-r17) may be defined in the standard so that, without reporting actual preferred K0/K2 values for SCS set2, the corresponding values may be derived via the values reported for existing SCS set1.

Terms representing the parameters and indicators described with reference to FIG. 7 are terms defined to be applicable to various embodiments of the disclosure, and may vary according to the intention of a user or operator, practice, or the like.

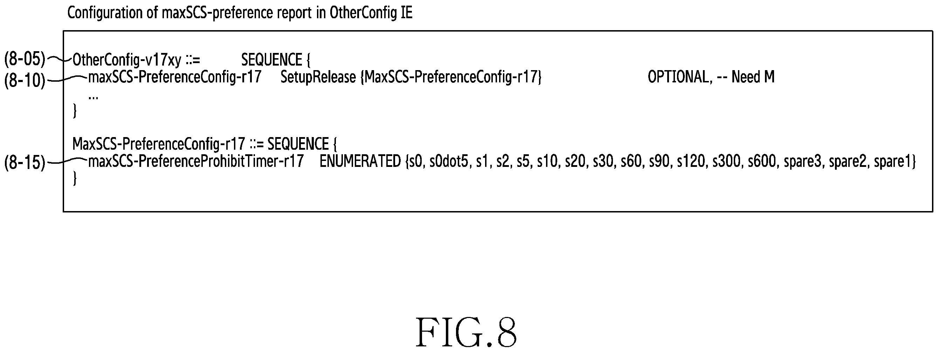

FIG. 8 is a diagram illustrating an example of base station configuration information for indicating a terminal to report a terminal preference for a maximum SCS value in relation to a power-saving operation, according to an embodiment of the disclosure.

Referring to FIG. 8, Otherconfig-v17xy 8-05 may include maxSCS-PreferenceConfig-r17 8-10 for indicating a terminal to report a UE preference for a maximum SCS value by using power saving-related UE assistance information (option 1 6-05 or option 2 6-20) defined in FIG. 6. When terminal reporting of the maximum SCS value is set up by maxSCS-PreferenceConfig-r17 8-10, a prohibit timer may be used to prevent the reporting from occurring too frequently, and a corresponding prohibit timer configuration value may be defined as maxSCS-PreferenceProhibiTimer-r17 8-15.

Terms representing the parameters and indicators described with reference to FIG. 8 are terms defined to be applicable to various embodiments of the disclosure, and may vary according to the intention of a user or operator, practice, or the like.

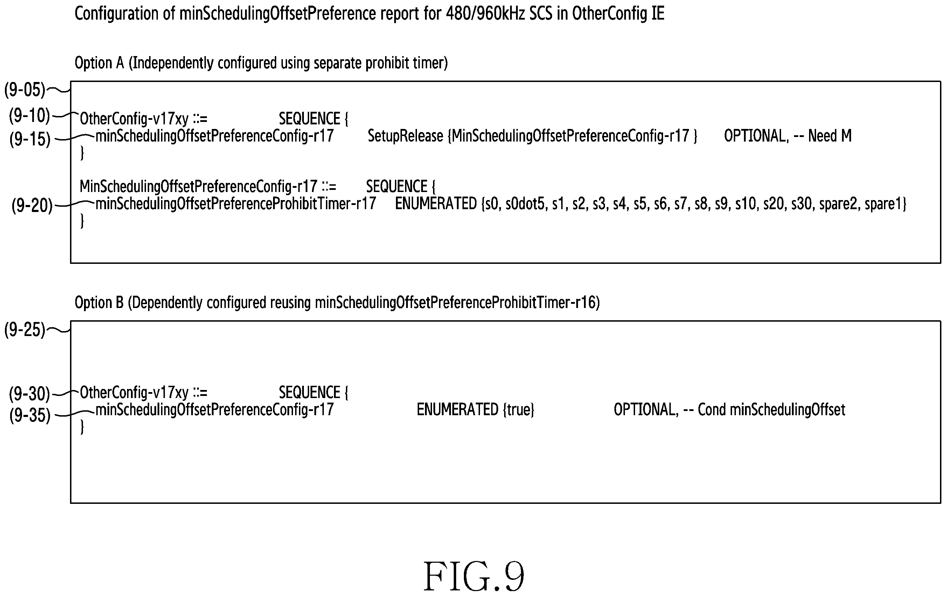

FIG. 9 is a diagram illustrating an example of base station configuration information for indicating a terminal to report a terminal preference for a minimum scheduling offset value for each 480 kHz SCS and each 960 kHz SCS in relation to a power-saving operation, according to an embodiment of the disclosure.

Referring to FIG. 9, two options may be considered as a method for indicating a terminal to report minimum scheduling offset preferences for 480 kHz SCS and 960 kHz SCS (hereinafter, referred to as SCS set2) by using the power saving-related UE assistance information (option 2-1 7-05 or option 2-2 7-25) newly defined in FIG. 7.
(1) Option A 9-05: Method of configuring reporting on SCS set2 separately from indication of reporting on existing SCS values (e.g., 15 kHz, 30 kHz, 60 kHz, and 120 kHz, hereinafter, referred to as SCS set1).
(1-1) In this case, reporting on SCS set2-related information (e.g., minSchedulingOffsetPreference-v17xy) may be configured regardless of whether reporting on SCS set1-related information (e.g., minSchedulingOffsetPreference-r16) is configured.
(1-2) Configuration of reporting on SCS set2-related information (e.g., minSchedulingOffsetPreference-v17xy) may be performed in two operations. In OtherConfig IE, a new nonCriticalExtension field of OtherConfig-v17xy 9-10 may be added, and SetupRelease for new information, such as minSchedulingOffsetPreferenceConfig-r17 9-15, may be configured. When a reporting configuration for SCS set2-related new information is setup, ProhibitTimer used for corresponding reporting may be configured separately via minSchedulingOffsetPreferenceProhibitTimer-r17 9-20. ProhibitTimer configured here is used to prevent the reporting from being repeated too frequently, and may have a separate timer value from ProhibitTimer configured for reporting of SCS set1-related existing information (e.g., min SchedulingOffsetPreference-r 16).
(1-3) When option A 9-05 is used, the base station may separately configure, for the terminal, reporting indication of SCS set1-related existing information (e.g., min SchedulingOffsetPreference-r 16) and SCS set2-related information (e.g., minSchedulingOffsetPreference-v17xy), and the terminal reports only one of SCS set1-related information or SCS set2-related information as needed, thereby enabling efficient UE assistance information reporting.
(2) Option B 9-25: Method of indicating reporting on SCS setl-related existing information (e.g., minSchedulingOffsetPreference-r16) and configuring reporting on SCS set2-related information (option 2-1 7-05 or option 2-2 7-25).
(2-1) In this case, reporting on new information (e.g., minSchedulingOffsetPreference-v17xy) may be configured together when reporting on existing information (e.g., minSchedulingOffsetPreference-r16) is configured.
(2-2) Reporting on the new information (e.g., minSchedulingOffsetPreference-v17xy) may be configured together with configuration of reporting on the existing information (e.g., minSchedulingOffsetPreference-r16), and 1-bit indicator minSchedulingOffsetPreferenceConfig-r17 9-35 indicating reporting on the new information may be defined in an enumerator or Boolean form. When the indicator is configured to be "True", the terminal may report the new information, and ProhibitTimer configured for reporting on the existing information may be used together to report the new information.
(2-3) When option B 9-25 is used, the base station may configure, for the terminal, indications of reporting on both the existing information (e.g., minSchedulingOffsetPreference-r16) and the new information (e.g., minSchedulingOffsetPreference-v17xy), and the terminal may use one ProhibitTimer for both the two forms of information reporting, thereby alleviating a terminal operation load.

Terms representing the parameters and indicators described with reference to FIG. 9 are terms defined to be applicable to various embodiments of the disclosure, and may vary according to the intention of a user or operator, practice, or the like.

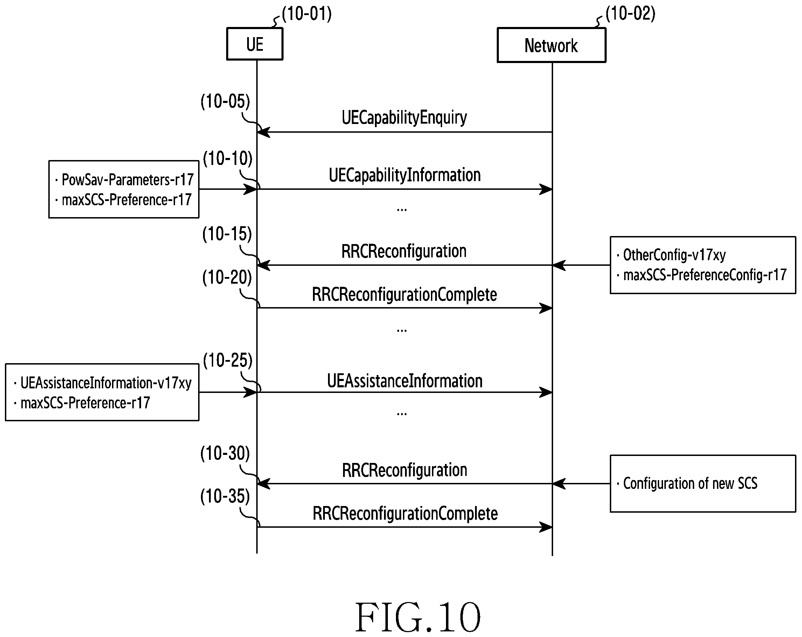

FIG. 10 is a diagram illustrating a procedure of requesting and reporting UE assistance information including a terminal preference for a maximum SCS value between a terminal and a base station, and reconfiguring a terminal connection accordingly, according to an embodiment of the disclosure.

Referring to FIG. 10, in operation 10-05, a terminal 10-01 receives UECapabilityEnquiry from a base station 10-02.

In operation 10-10, the terminal 10-01 transmits UECapabilityInformation to the base station 10-02.

In operation 10-15, the terminal 10-01 receives RRCReconfiguration from the base station 10-02.

In operation 10-20, the terminal 10-01 transmits RRCReconfigurationComplete to the base station 10-02.

In operation 10-25, the terminal 10-01 transmits UEAssistanceInformation to the base station 10-02.

In operation 10-30, the terminal 10-01 receives RRCReconfiguration from the base station 10-02.

In operation 10-35, the terminal 10-01 transmits RRCReconfigurationComplete to the base station 10-02.

Referring to FIG. 10, messages exchanged between the terminal 10-01 and the base station 10-02 may be identified for each operation while corresponding procedures are in progress. In addition, internal operations of the terminal and base station, which are performed in respective operations, may be described as follows.

### - [Terminal operations] Operation 10- 10

(1) When the base station requests UE capability information for NR in operation 10-05, the terminal may report UE capability information indicating whether power saving-related UE assistance information is reportable.
(2) If the terminal is able to report maxSCS-Preference-r17 defined in FIG. 6, the terminal may report PowSav-Parameters-r17 5-10 after configuring a value of parameter maxSCS-Preference-r17 5-15 included therein to "supported".

### - [Base station operation] Operation 10-15

(1) When the terminal configures the value of "maxSCS-Preference-r17" 5-15' to be "supported" and perform reporting in operation 10-10, the base station may configure, in operation 10-15, the terminal to report maxSCS-Preference information.
(2) The base station may include OtherConfig-v17xy 8-05 in OtherConfig IE via nonCriticalExtension, and may configure the terminal to report maxSCS-Preference-r17 defined in FIG. 6, by using parameter maxSCS-PreferenceConfig-r17 8-10 included in OtherConfig-v17xy.
(3) In order to reduce a load generated when the terminal reports the maxSCS-Preference value too frequently, the base station may configure a prohibit timer value with parameter maxSCS-PreferenceProhibitTimer-r17 8-15 while configuring a maxSCS-PreferenceConfig-r17 value.

### - [Terminal operation] Operation 10-25

(1) When the base station indicates, in operation 10-15 via parameter maxSCS-PreferenceConfig-r17 8-10, the terminal to report the maxSCS-Preference-r17 information defined as in FIG. 6, the terminal may report the maxSCS-Preference-r17 value in operation 10-25.
(2) When the terminal capable of reporting the maxSCS-Preference information operates in an RRC _CONNECTED mode, and the base station indicates reporting as above, the reporting may start in the following cases.
(2-1) When a terminal preference for a maximum SCS exists
(2-2) When the terminal preference for the maximum SCS is changed
(3) When terminal reporting for maxSCS-Preference is started as described above, the terminal may perform reporting as shown in [Table 2] below. (For reference, the value expressed as Txyz in the following operation is a value configured with parameter maxSCS-PreferenceProhibitTimer-r17 by the base station in operation 10-15.)

**[Table 2]**

| |
|---|
| 1> if configured to provide its preference on the maximum SCS of a cell group for power saving: |
| 2> if the UE has a preference on the maximum SCS of the cell group and the UE did not transmit a *UEAssistanceInformation* message with *maxSCS-Preference* for the cell group since it was configured to provide its preference on the maximum SCS of the cell group for power saving; or |
| 2> if the current *maxSCS-Preference* information for the cell group is different from the one indicated in the last transmission of the *UEAssistanceInformation* message including *maxSCS-Preference* for the cell group and timer Txyz associated with the cell group is not running: |
| 3> start the timer Txyz with the timer value set to the *maxSCS-PreferenceProhibitTimer* of the cell group; |
| 3> initiate transmission of the *UEAssistanceInformation* message to provide the current *maxSCS-Preference;* |

(4) When UE assistance information reporting on the maximum SCS value starts as described above, specifically, as in FIG. 6, the terminal may perform transmission to the base station after including UEAssistanceInformation-v17xy in the UEAssistanceInformation message via nonCriticalExtension and including, again in the UEAssistanceInformation message, the maxSCS-Preference-r17 value.

### - [Base station operation] Operation 10-30

(1) When the maxSCS-Preference information is acquired from the terminal in operation 10-25, the base station may change a connection configuration of the terminal via the RRCReconfiguration message.
(2) Specifically, SCS values used in cells within a corresponding cell group may be changed by referring to preference information for the maximum SCS reported by the terminal.
(3) If a value greater than the value indicated by maxSCS-Preference-r17 reported by the terminal exists in preconfigured SCS values, the base station may change the corresponding value to a lower value so as to decrease an FFT operation speed for demodulating an OFDM symbol at the terminal end, so that energy consumption may be reduced at the terminal end.

Terms representing the parameters and indicators described with reference to FIG. 10 are terms defined to be applicable to various embodiments of the disclosure, and may vary according to the intention of a user or operator, practice, or the like.

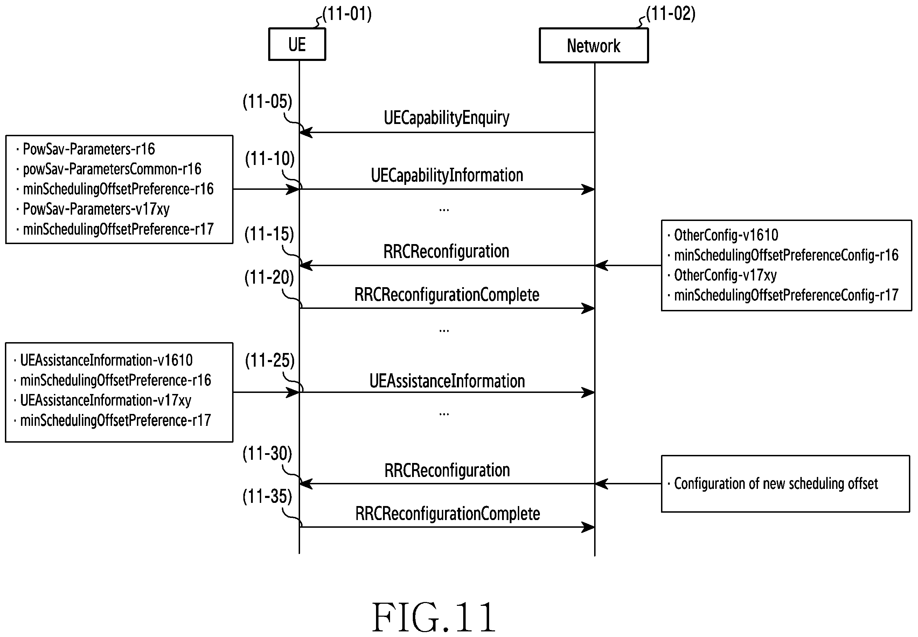

FIG. 11 is a diagram illustrating a procedure of requesting and reporting UE assistance information including a terminal preference for a minimum scheduling offset value for each SCS between a terminal and a base station, and reconfiguring a terminal connection accordingly, according to an embodiment of the disclosure.

Referring to FIG. 11, in operation 11-05, a terminal 11-01 receives UECapabilityEnquiry from a base station 11-02.

In operation 11-10, the terminal 11-01 transmits UECapabilityInformation to the base station 11-02.

In operation 11-15, the terminal 11-01 receives RRCReconfiguration from the base station 11-02.

In operation 11-20, the terminal 11-01 transmits RRCReconfigurationComplete to the base station 11-02.

In operation 11-25, the terminal 11-01 transmits UEAssistanceInformation to the base station 11-02.

In operation 11-30, the terminal 11-01 receives RRCReconfiguration from the base station 11-02.

In operation 11-35, the terminal 11-01 transmits RRCReconfigurationComplete to the base station 11-02.

Referring to FIG. 11, messages exchanged between the terminal 11-01 and the base station 11-02 may be identified for each operation while corresponding procedures are in progress. In addition, internal operations of the terminal and base station, which are performed in respective operations, may be described as follows.

### - [Terminal operation] Operation 11-10

(1) When UE capability information for NR is requested from the base station in operation 11-05, the terminal may report UE capability information indicating whether power saving-related UE assistance information is reportable.
(2) If the terminal is able to report a preference for a minimum scheduling offset value for SCS values belonging to SCS set1 via parameter minSchedulingOffsetPreference-r16, the terminal may report PowSav-Parameters-r16 after configuring a minSchedulingOffsetPreference-r16 value included therein to be "supported".
(3) If the terminal is able to report the preference for the minimum scheduling offset value for SCS values belonging to SCS set2 via parameter minSchedulingOffsetPreference-v17xy defined in FIG. 7, the terminal may report PowSav-Parameters-r17 5-10 after configuring a value of parameter minSchedulingOffsetPreference-r17 5-20 included therein to be "supported".

### - [Base station operation] Operation 11-15

(1) When the terminal configures the minSchedulingOffsetPreference-r16 value to be "supported" and performs reporting in operation 11-10, the base station may configure, in operation 11-5, the terminal to report minimum scheduling offset preference information for the SCS values belonging to SCS set1 via parameter minSchedulingOffsetPreference-r16.
(2) The base station may include OtherConfig-v1610 in OtherConfig IE via nonCriticalExtension, and may configure therein the terminal to report minSchedulingOffsetPreference-r16, by using parameter minSchedulingOffsetPreferenceConfig-r16.
(3) In order to reduce a load generated when the terminal reports the min SchedulingOffsetPreference-r 16 value too frequently, the base station may configure a prohibit timer value with parameter minSchedulingOffsetPreferenceProhibitTimer-r16 while configuring a minSchedulingOffsetPreferenceConfig-r16 value.
(4) When the terminal configures a min SchedulingOffsetPreference-r 17 value to be "supported" and performs reporting in operation 11-10, the base station may configure, in operation 11-5, the terminal to report minimum scheduling offset preference information for the SCS values belonging to SCS set2 via parameter minSchedulingOffsetPreference-r17.
(5) The base station may include OtherConfig-v17xy 9-10 in OtherConfig IE via nonCriticalExtension, and may configure therein the terminal to report min SchedulingOffsetPreference-r 17, by using parameter minSchedulingOffsetPreferenceConfig-r17 9-15 or 9-35.
(6) In order to reduce a load generated when the terminal reports the min SchedulingOffsetPreference-r 17 value too frequently, the base station may also configure a prohibit timer value. In this case, one of the two options 9-05 or 9-25 described in FIG. 9 may be used.

### - [Terminal operation] Operation 11-25

(1) When the base station indicates, in operation 11-15, reporting of the minimum scheduling offset preference information for the SCS values belonging to SCS set1 via parameter minSchedulingOffsetPreferenceConfig-r16, the terminal may report the min SchedulingOffsetPreference-r 16 value in operation 11-25.
(2) When the base station indicates, in operation 11-15, reporting of the minimum scheduling offset preference information for the SCS values belonging to SCS set2 via parameter minSchedulingOffsetPreferenceConfig-r17, the terminal may report the minSchedulingOffsetPreference-r17 value in operation 11-25.
(3) When the terminal capable of reporting minSchedulingOffsetPreference information operates in an RRC _CONNECTED mode, and the base station indicates reporting as above, the reporting may start in the following cases.
(3-1) When a terminal preference for a minimum scheduling offset exists
(3-2) When the terminal preference for the minimum scheduling offset is changed
(4) When terminal reporting for minSchedulingOffsetPreference is started as described above, the terminal may perform reporting as shown in [Table 3] below.

**[Table 3]**

| |
|---|
| 1> if configured to provide its preference on the minimum scheduling offset for cross-slot scheduling of a cell group for power saving: |
| 2> if the UE has a preference on the minimum scheduling offset for cross-slot scheduling of the cell group and the UE did not transmit a *UEAssistanceInformation* message with *minSchedulingOffsetPreference-r16*/ *minSchedulingOffsetPreference-r17* for the cell group since it was configured to provide its preference on the minimum scheduling offset for cross-slot scheduling of the cell group for power saving; or |
| 2> if the current *minSchedulingOffsetPreference-r16*/ *minSchedulingOffsetPreference-r17* information for the cell group is different from the one indicated in the last transmission of the *UEAssistanceInformation* message including *minSchedulingOffsetPreference-r16*/ *minSchedulingOffsetPreference-r17* for the cell group and timer T346e associated with the cell group is not running: |
| 3> start the timer T346e with the timer value set to the *minSchedulingOffsetPreferenceProhibitTimer* of the cell group; |
| 3> if the procedure initiate transmission of the *UEAssistanceInformation* message to provide the current *minSchedulingOffsetPreference-r16*/ *minSchedulingOffsetPreference-r17;* |

(5) When reporting of UE assistance information for the minimum scheduling offset values starts as described above, preferred K0/K2 values for each SCS value may be reported. When reporting of information on the SCS values belonging to SCS set1 is determined, the terminal may report the information by using parameter preferredK0-r16/preferredK2-r16 in a field of minSchedulingOffsetPreference-r16, and when reporting of information on the SCS values belonging to SCS set2 is determined, the terminal may report the information by using parameter preferredK0-r17/preferredK2-r17 in minSchedulingOffsetPreference-r17.

### - [Base station operation] Operation 11-30

(1) When the minSchedulingOffsetPreference information is acquired from the terminal in operation 11-25, the base station may change a connection configuration of the terminal via the RRCReconfiguration message.
(2) Specifically, by referring to the minimum scheduling offset preference information preferred for each of respective SCS values reported by the terminal, scheduling offset values used in cells using the respective SCSs may be changed.
(3) If there exists, among cells using a specific SCS value, a cell using K0/K2 values smaller than the preferred K0/K2 values reported by the terminal with respect to the SCS value, the base station may change the K0/K2 values used in the corresponding cell to values greater than the values indicated by the terminal, thereby ensuring a time to process DCI at the terminal end. The terminal may reduce unnecessary energy consumption by completing DCI processing before data transmission starts on a PDSCH/PUSCH mapped to the DCI.

Terms representing the parameters and indicators described with reference to FIG. 11 are terms defined to be applicable to various embodiments of the disclosure, and may vary according to the intention of a user or operator, practice, or the like.

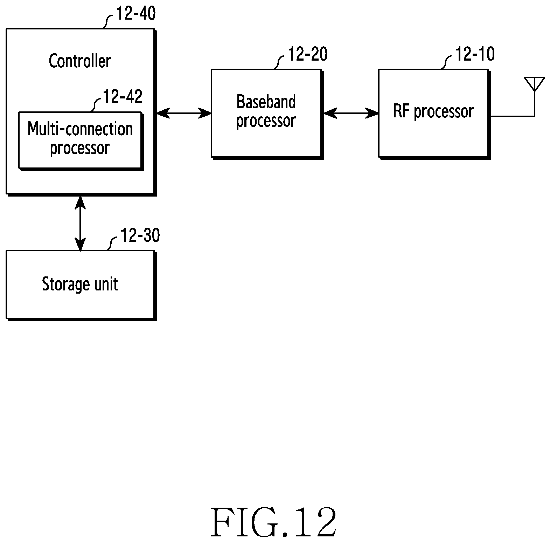

FIG. 12 is a diagram illustrating a terminal device according to an embodiment of the disclosure.

Referring to FIG. 12, a terminal may include a radio frequency (RF) processor 12-10, a baseband processor 12-20, a storage unit 12-30, and a controller 12-40. The elements of the terminal are not limited to the exemplary elements illustrated in FIG. 12, and may include fewer or more elements than the elements illustrated in FIG. 12.

The RF processor 12-10 may perform a function for signal transmission and reception via a wireless channel, such as signal band transform and amplification. For example, the RF processor 12-10 may up-convert a baseband signal provided from the baseband processor 12-20 into an RF band signal, transmit the converted RF band signal via an antenna, and then downconvert the RF band signal received via the antenna into a baseband signal. For example, the RF processor 12-10 may include a transmission filter, a reception filter, an amplifier, a mixer, an oscillator, a digital-to-analog converter (DAC), an analog-to-digital converter (ADC), etc. but is not limited thereto. In FIG. 12, only one antenna is illustrated, but the terminal may have multiple antennas. In addition, the RF processor 12-10 may include multiple RF chains. Furthermore, the RF processor 12-10 may perform beamforming. For beamforming, the RF processor 12-10 may adjust a phase and a magnitude of each of signals transmitted and received via multiple antennas or antenna elements. In addition, the RF processor 12-10 may perform MIMO, and may receive multiple layers when performing an MIMO operation.

The baseband processor 12-20 may perform a function of conversion between a baseband signal and a bitstream according to a physical layer specification of the system. For example, during data transmission, the baseband processor 12-20 may generate complex symbols by encoding and modulating a transmission bitstream. In addition, during data reception, the baseband processor 12-20 may reconstruct a reception bitstream via demodulation and decoding of a baseband signal provided from the RF processor 12-10. For example, when conforming to an orthogonal frequency division multiplexing (OFDM) scheme, during data transmission, the baseband processor 12-20 may generate complex symbols by encoding and modulating a transmission bitstream, map the generated complex symbols to sub-carriers, and then configure OFDM symbols via an inverse fast Fourier transform (IFFT) operation and cyclic prefix (CP) insertion. In addition, during data reception, the baseband processor 12-20 may divide the baseband signal provided from the RF processor 12-10 in units of OFDM symbols, reconstruct the signals mapped to the sub-carriers via a fast Fourier transform (FFT) operation, and then reconstruct the reception bitstream via demodulation and decoding.

The baseband processor 12-20 and the RF processor 12-10 may transmit and receive signals as described above. Accordingly, the baseband processor 12-20 and the RF processor 12-10 may be referred to as a transmitter, a receiver, a transceiver, or a communication unit. Furthermore, at least one of the baseband processor 12-20 and the RF processor 12-10 may include multiple communication modules to support multiple different radio access technologies. In addition, at least one of the baseband processor 12-20 and the RF processor 12-10 may include different communication modules to process signals of different frequency bands. For example, the different radio access technologies may include a wireless LAN (e.g., IEEE 802.11), a cellular network (e.g., LTE), and the like. In addition, the different frequency bands may include a superhigh frequency (SHF) (e.g., 2.NRHz, NRhz) band, and a millimeter wave (e.g., 60 GHz) band. The terminal may transmit signals to and receive signals from the base station by using the baseband processor 12-20 and the RF processor 12-10, and the signals may include control information and data.

The storage unit 12-30 may store data, such as a basic program, an application program, and configuration information for terminal operations. For example, the storage unit 12-30 may store data information, such as a basic program, an application program, and configuration information for terminal operations. In addition, the storage unit 12-30 may provide stored data in response to a request of the controller 12-40.

The storage unit 12-30 may include a storage medium, such as a ROM, a RAM, a hard disk, a CD-ROM, and a DVD, or a combination of storage media. In addition, the storage unit 12-30 may include multiple memories. According to an embodiment of the disclosure, the storage unit 12-30 may store a program for performing a handover method according to the disclosure.

The controller 12-40 may control overall operations of the terminal. For example, the controller 12-40 may transmit and receive signals via the baseband processor 12-20 and the RF processor 12-10.

In addition, the controller 12-40 may record and read data in the storage unit 12-30. To this end, the controller 12-40 may include at least one processor. For example, the controller 12-40 may include a communication processor (CP) configured to perform control for communication and an application processor (AP) configured to control a higher layer, such as an application program. In addition, according to an embodiment of the disclosure, the controller 12-40 may include a multi-connection processor 12-42 configured to process a process operating in a multi-connection mode. In addition, at least one element within the terminal may be implemented in a single chip.

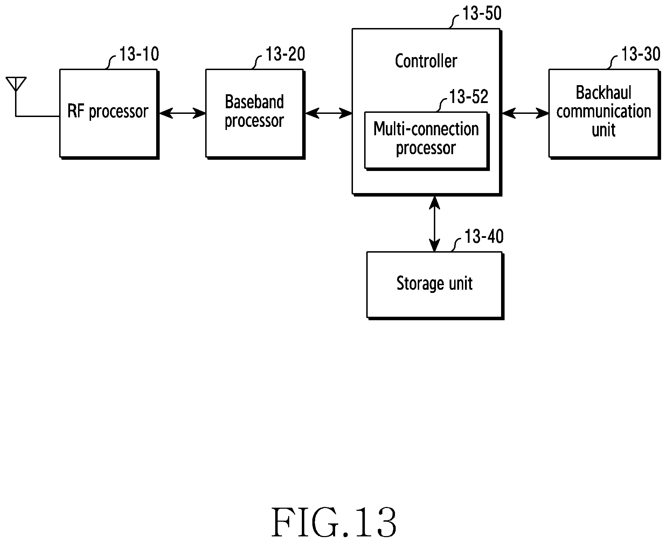

FIG. 13 is a diagram illustrating a base station device according to an embodiment of the disclosure.

The base station in FIG. 13 may be included in the network described above.

As illustrated in FIG. 13, the base station may include an RF processor 13-10, a baseband processor 13-20, a backhaul communication unit 13-30, a storage unit 13-40, and a controller 13-50. The elements of the base station are not limited to the exemplary elements illustrated in FIG. 13, and the base station may include fewer or more elements than the elements illustrated in FIG. 13. The RF processor 13-10 may perform a function for signal transmission and reception via a wireless channel, such as signal band transform and amplification. For example, the RF processor 13-10 may up-convert a baseband signal provided from the baseband processor 13-20 into an RF band signal, transmit the converted RF band signal via an antenna, and then downconvert the RF band signal received via the antenna into a baseband signal. For example, the RF processor 13-10 may include a transmission filter, a reception filter, an amplifier, a mixer, an oscillator, a DAC, an ADC, and the like. In FIG. 13, only one antenna is illustrated, but the RF processor 13-10 may have multiple antennas. In addition, the RF processor 13-10 may include multiple RF chains. Furthermore, the RF processor 13-10 may perform beamforming. For beamforming, the RF processor 13-10 may adjust a phase and a magnitude of each of signals transmitted and received via multiple antennas or antenna elements. The RF processor 13-10 may perform a downlink MIMO operation by transmitting one or more layers.

The baseband processor 13-20 may perform a function of conversion between a baseband signal and a bitstream according to a physical layer specification. For example, during data transmission, the baseband processor 13-20 may generate complex symbols by encoding and modulating a transmission bitstream. In addition, during data reception, the baseband processor 13-20 may reconstruct a reception bitstream via demodulation and decoding of a baseband signal provided from the RF processor 13-10. For example, when conforming to an OFDM scheme, during data transmission, the baseband processor 13-20 may generate complex symbols by encoding and modulating a transmission bitstream, map the generated complex symbols to sub-carriers, and then configure OFDM symbols via an IFFT operation and CP insertion. In addition, during data reception, the baseband processor 13-20 may divide the baseband signal provided from the RF processor 13-10 in units of OFDM symbols, reconstruct the signals mapped to the sub-carriers via an FFT operation, and then reconstruct the reception bitstream via demodulation and decoding. The baseband processor 13-20 and the RF processor 13-10 may transmit and receive signals as described above. Accordingly, the baseband processor 13-20 and the RF processor 13-10 may be referred to as a transmitter, a receiver, a transceiver, a communication unit, or a wireless communication unit. The base station may transmit signals to and receive signals from the terminal by using the baseband processor 13-20 and the RF processor 13-10, and the signals may include control information and data.

The backhaul communication unit 13-30 may provide an interface to perform communication with other nodes within a network. For example, the backhaul communication unit 13-30 may convert, into a physical signal, a bitstream transmitted from a main base station to another node, for example, an auxiliary base station, a core network, etc. and may convert a physical signal received from the another node into a bitstream.

The storage unit 13-40 may store data, such as a basic program, an application program, and configuration information for operations of the main base station. For example, the storage unit 13-40 may store information on a bearer assigned to a connected terminal, a measurement result reported from the connected terminal, and the like. Additionally, the storage unit 13-40 may store information serving as a criterion for determining whether to provide the terminal with multi-connectivity or to suspend multi- connectivity. In addition, the storage unit 13-40 may provide stored data in response to a request of the controller 13-50. The storage unit 13-40 may include a storage medium, such as a ROM, a RAM, a hard disk, a CD-ROM, and a DVD, or a combination of storage media. In addition, the storage unit 13-40 may include multiple memories. According to an embodiment of the disclosure, the storage unit 13-40 may store a program for performing handover according to the disclosure.

The controller 13-50 may control overall operations of the main base station. For example, the controller 13-50 may transmit and receive signals via the baseband processor 13-20 and the RF processor 13-10 or via the backhaul communication unit 13-30. In addition, the controller 13-50 may record and read data in the storage unit 13-40. To this end, the controller 13-50 may include at least one processor. In addition, according to an embodiment of the disclosure, the controller 13-50 may include a multi-connection processor 13-52 configured to process a process operating in a multi-connection mode.

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program may include instructions that cause the electronic device to perform the methods according to various embodiments of the disclosure as defined by the appended claims and/or disclosed herein.

These programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. Furthermore, a plurality of such memories may be included in the electronic device.

In addition, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Furthermore, a separate storage device on the communication network may access a portable electronic device.

In the disclosure, the term "computer program product" or "computer readable medium" is used to generally refer to a medium such as a memory, a hard disk installed in a hard disk drive, or a signal. The "computer program product" or "computer readable medium" is an element that is provided to a method for reporting UE capability in a wireless communication system according to the disclosure.

The machine-readable storage medium may be provided in the form of a non-transitory storage medium. Wherein, the term "non-transitory storage medium" simply means that the storage medium is a tangible device, and does not include a signal (e.g., an electromagnetic wave), but this term does not differentiate between where data is semi-permanently stored in the storage medium and where the data is temporarily stored in the storage medium. As an example, the "non-transitory storage medium" may include a buffer in which data is temporarily stored.

According to an embodiment, methods according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., Play Store TM), or between two user devices (e.g., smart phones) directly. If distributed online, at least a part of the computer program product (e.g., a downloadable app) may be temporarily generated or at least temporarily stored in the machine-readable storage medium, such as memory of the manufacturer's server, a server of the application store, or a relay server.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

The embodiments of the disclosure described and shown in the specification and the drawings are merely specific examples that have been presented to easily explain the technical contents of embodiments of the disclosure and help understanding of embodiments of the disclosure, and are not intended to limit the scope of embodiments of the disclosure. That is, it will be apparent to those skilled in the art that other variants based on the technical idea of the disclosure may be implemented. Furthermore, the above respective embodiments may be employed in combination, as necessary. For example, one embodiment of the disclosure may be partially combined with any other embodiment to operate a base station and a terminal. In addition, the embodiments of the disclosure may be applied to other communication systems and other variants based on the technical idea of the embodiments may also be implemented. For example, the embodiments may be applied to LTE, 5G, NR, or 6G systems. Therefore, the scope of the disclosure should not be defined as being limited to the embodiments set forth herein, but should be defined by the appended claims and equivalents thereof.

## Claims

1. A method performed by a terminal in a wireless communication system, the method comprising:
receiving, from a base station, a first message comprising first information configuring a reporting of a minimum scheduling offset preferred by the terminal for a subcarrier spacing for frequency range (FR) 2-2; and
transmitting, to the base station, a second message comprising second information that is assistance information indicating the minimum scheduling offset preferred by the terminal for the subcarrier spacing,
wherein the subcarrier spacing comprises at least one of 480 kHz or 960 kHz,
wherein the first message further comprises third information configuring a reporting of a minimum scheduling offset preferred by the terminal for a subcarrier spacing different from the subcarrier spacing for FR 2-2, and
wherein the first information and the third information are different from each other.

2. The method of claim 1,
wherein the second information:
for each of the subcarrier spacing, comprises a K0 value indicating a physical downlink shared channel (PDSCH) scheduling offset preferred by the terminal, and the K0 value is 8 slots, 16 slots, 32 slots, or 48 slots; and
for each of the subcarrier spacing, comprises a K2 value indicating a physical uplink shared channel (PUSCH) scheduling offset preferred by the terminal, and the K2 value is 8 slots, 16 slots, 32 slots, or 48 slots.

3. The method of claim 1,
wherein a same timer is applied to the reporting of the assistance information for the subcarrier spacing for FR 2-2 and a reporting of assistance information for the subcarrier spacing different from the subcarrier spacing for FR 2-2; and
wherein the first information is included in other configurations of the first message that is a radio resource control (RRC) reconfiguration message, and the second information is included in the second message that is a user equipment assistance information (UAI) message.

4. The method of claim 3,
wherein the first message further comprises fourth information for configuration of reporting a maximum subcarrier spacing preferred by the terminal, and the second message further comprises fifth information that is assistance information indicating the maximum subcarrier spacing preferred by the terminal.

5. A method performed by a base station in a wireless communication system, the method comprising:
transmitting, to a terminal, a first message comprising first information configuring a reporting of a minimum scheduling offset preferred by the terminal for a subcarrier spacing for frequency range (FR) 2-2; and
receiving, from the terminal, a second message comprising second information that is assistance information indicating the minimum scheduling offset preferred by the terminal for the subcarrier spacing,
wherein the subcarrier spacing comprises at least one of 480 kHz or 960 kHz,
wherein the first message further comprises third information configuring a reporting of a minimum scheduling offset preferred by the terminal for a subcarrier spacing different from the subcarrier spacing for FR 2-2, and
wherein the first information and the third information are different from each other.

6. The method of claim 5,
wherein the second information:
for each of the subcarrier spacing, comprises a K0 value indicating a physical downlink shared channel (PDSCH) scheduling offset preferred by the terminal, and the K0 value is 8 slots, 16 slots, 32 slots, or 48 slots; and
for each of the subcarrier spacing, comprises a K2 value indicating a physical uplink shared channel (PUSCH) scheduling offset preferred by the terminal, and the K2 value is 8 slots, 16 slots, 32 slots, or 48 slots.

7. The method of claim 5,
wherein a same timer is applied to the reporting of the assistance information for the subcarrier spacing for FR 2-2 and a reporting of assistance information for the subcarrier spacing different from the subcarrier spacing for FR 2-2; and
wherein the first information is included in other configurations of the first message that is a radio resource control (RRC) reconfiguration message, and the second information is included in the second message that is a user equipment assistance information (UAI) message.

8. A terminal in a wireless communication system, the terminal comprising:
a transceiver; and
a controller coupled with the transceiver and configured to:
receive, from a base station, a first message comprising first information configuring a reporting of a minimum scheduling offset preferred by the terminal for a subcarrier spacing for frequency range (FR) 2-2, and
transmit, to the base station, a second message comprising second information that is assistance information indicating the minimum scheduling offset preferred by the terminal for the subcarrier spacing,
wherein the subcarrier spacing comprises at least one of 480 kHz or 960 kHz,
wherein the first message further comprises third information configuring a reporting of a minimum scheduling offset preferred by the terminal for a subcarrier spacing different from the subcarrier spacing for FR 2-2, and
wherein the first information and the third information are different from each other.

9. The terminal of claim 8,
wherein the second information:
for each of the subcarrier spacing, comprises a K0 value indicating a physical downlink shared channel (PDSCH) scheduling offset preferred by the terminal, and the K0 value is 8 slots, 16 slots, 32 slots, or 48 slots; and
for each of the subcarrier spacing, comprises a K2 value indicating a physical uplink shared channel (PUSCH) scheduling offset preferred by the terminal, and the K2 value is 8 slots, 16 slots, 32 slots, or 48 slots.

10. The terminal of claim 8,
wherein a same timer is applied to the reporting of the assistance information for the subcarrier spacing for FR 2-2 and a reporting of assistance information for the subcarrier spacing different from the subcarrier spacing for FR 2-2, and
wherein the first information is included in other configurations of the first message that is a radio resource control (RRC) reconfiguration message, and the second information is included in the second message that is a user equipment assistance information (UAI) message.

11. The terminal of claim 10,
wherein the first message further comprises fourth information for configuration of reporting a maximum subcarrier spacing preferred by the terminal, and the second message further comprises fifth information that is assistance information indicating the maximum subcarrier spacing preferred by the terminal.

12. A base station in a wireless communication system, the base station comprising:
a transceiver; and
a controller coupled with the transceiver and configured to:
transmit, to a terminal, a first message comprising first information configuring a reporting of a minimum scheduling offset preferred by the terminal for a subcarrier spacing for frequency range (FR) 2-2, and
receive, from the terminal, a second message comprising second information that is assistance information indicating the minimum scheduling offset preferred by the terminal for the subcarrier spacing,
wherein the subcarrier spacing comprises at least one of 480 kHz or 960 kHz,
wherein the first message further comprises third information configuring a reporting of a minimum scheduling offset preferred by the terminal for a subcarrier spacing different from the subcarrier spacing for FR 2-2, and
wherein the first information and the third information are different from each other.

13. The base station in claim 12,
wherein the second information:
for each of the subcarrier spacing, comprises a K0 value indicating a physical downlink shared channel (PDSCH) scheduling offset preferred by the terminal, and the K0 value is 8 slots, 16 slots, 32 slots, or 48 slots; and
for each of the subcarrier spacing, comprises a K2 value indicating a physical uplink shared channel (PUSCH) scheduling offset preferred by the terminal, and the K2 value is 8 slots, 16 slots, 32 slots, or 48 slots.

14. The base station in claim 12,
wherein a same timer is applied to the reporting of the assistance information for the subcarrier spacing for FR 2-2 and a reporting of assistance information for the subcarrier spacing different from the subcarrier spacing for FR 2-2, and
wherein the first information is included in other configurations of the first message that is a radio resource control (RRC) reconfiguration message, and the second information is included in the second message that is a user equipment assistance information (UAI) message.

15. The base station in claim 12,
wherein the first message further comprises fourth information for configuration of reporting a maximum subcarrier spacing preferred by the terminal, and the second message further comprises fifth information that is assistance information indicating the maximum subcarrier spacing preferred by the terminal.
